# EUROPÄISCHE PATENTSCHRIFT

(11) **EP 1 332 074 B1**
(45) Veröffentlichungstag und Bekanntmachung des Hinweises auf die Patenterteilung: **17.05.2006**
(21) Anmeldenummer: 01988670.4
(22) Anmeldetag: 26.10.2001
(51) Int. Cl.: B60S 1/40

(54) **VORRICHTUNG ZUM GELENKIGEN, LÖSBAREN VERBINDEN EINES WISCHBLATTS MIT EINEM ANGETRIEBENEN WISCHERARM**
DEVICE FOR CONNECTING A WIPER BLADE TO A DRIVEN WIPER ARM IN AN ARTICULATED AND DETACHABLE MANNER
DISPOSITIF POUR RELIER DE MANIERE ARTICULEE ET AMOVIBLE UN BALAI D'ESSUIE-GLACE A UN BRAS D'ESSUIE-GLACE COMMANDE

(30) Priorität: 28.10.2000 DE 10053601
(43) Veröffentlichungstag der Anmeldung: 06.08.2003
(73) Patentinhaber: ROBERT BOSCH GMBH, 70442 Stuttgart (DE)
(72) Erfinder: BREESCH, Frans, B-3840 Borgloon (BE); WINDMOLDERS, Eric, B-3510 Kermt (BE); VERTONGEN, Robert, B-3800 Sinterueiten (BE)
(86) Internationale Anmeldenummer: PCT/DE2001/004018
(87) Internationale Veröffentlichungsnummer: WO 2002/034591

(56) Entgegenhaltungen:
- DE-A- 4 016 202
- DE-A- 4 016 230
- DE-A- 19 907 629

## Beschreibung

### Stand der Technik

Wischblätter zum Reinigen von Kraftfahrzeugscheiben sind stets gelenkig mit dem die Arbeitsbewegung ausführenden Wischerarm verbunden, damit das Wischblatt gegenüber dem Wischerarm eine Pendelbewegung ausführen kann, deren Pendelachse quer zur Längserstreckung des Wischerarms und quer zur Richtung einer auf das Wischblatt einwirkenden Kraft liegt, mit welcher das Wischblatt an der Scheibe angelegt wird. Diese gelenkige Verbindung zwischen dem Wischblatt und dem Wischerarm ist von besonderer Bedeutung. Weil die zu wischende, in aller Regel sphärisch gekrümmte Scheibe nicht den Abschnitt einer Kugeloberfläche darstellt, muss sich das Wischblatt während seiner Wischbewegung ständig der jeweiligen Lage und dem Verlauf der Scheibenoberfläche anpassen können. Die Gelenkverbindung muss also leicht gängig aber auch spielfrei sein, damit eine ruhige ratterfreie Wischbewegung möglich ist. Bei einer bekannten, gemäß der Gattung des unabhängigen Anspruchs ausgebildeten Verbindungsvorrichtung (DE 199 07 629.4.A1) ist der Gelenkbolzen beidendig an den Schenkeln der wischerarmfesten Kupplungshälfte unlösbar verankert. Damit der Gelenkbolzen in seine Lagerausnehmung in der zweiten, wischblattseitigen Kupplungshälfte eingebracht werden kann, ist die Lagerausnehmung über einen sich über die gesamte Breite dieser Kupplungshälfte erstreckenden, elastisch aufweitbaren Montagekanal randoffen. Ein am Wischerarm angeordneter, winkelförmiger Ansatz verhindert ein unbeabsichtigtes Lösen des Wischblatts vom Wischerarm. Zum Abnehmen des Wischblatts vom Wischerarm muss dieser von der Scheibe weggeklappt werden, damit das Wischblatt um etwa 90° gegenüber dem Wischerarm geschwenkt werden kann.

Bei anderen Wischblättern mit einem Tragbügelsystem (DE-A-40 16 230 und DE-A-40 16 202) ist es bekannt, in den unten offenen Haupttragbügel von dessen Unterseite ausgehend eine Arretierungshilfe für den Gelenkbolzen einzubringen. Eine derartige Anordnung kann bei den hier beschriebenen gelenkfreien Wischblättern nicht eingesetzt werden.

### Vorteile der Erfindung

Durch die erfindungsgemäße Verbindungsvorrichtung wird der nach dem Zusammenfügen der beiden Kupplungshälften in deren Lagerausnehmungen eingebrachte Gelenkbolzen zumindest abschnittsweise an seiner Mantelfläche von den Lagerflächen der Lagerausnehmungen rundum geführt. Besondere Mittel zum Sichern des Wischblatts am Wischerarm können somit entfallen. Weiter kann beispielsweise ein Austausch des Wischblatts auch dann problemlos durchgeführt werden, wenn das die Wegklappbewegung ermöglichende Klappgelenk - beispielsweise aus Gründen des Karosseriestylings - in der Ablegeposition des Wischblatts am Scheibenrand von der Fahrzeugkarosserie abgedeckt und damit die Klappbewegung stark eingeschränkt ist. Zum Wischblattaustausch bei einer gemäß der Erfindung ausgebildeten Verbindungsvorrichtung ist nämlich allenfalls ein minimales Anheben des Wischblatts von der Scheibe erforderlich.

Zur Sicherung des Gelenkbolzens in den Lagerausnehmungen ist der Bolzen an seiner Mantelfläche mit einem Vorsprung versehen, dem eine auf die Abmessungen des Vorsprungs abgestimmte, an der Mantelfläche der Lagerausnehmung ausgebildete nutartige Aussparung in der zweiten Kupplungshälfte zugeordnet ist.

Wenn die nutartige Aussparung zur einen Wange der zweiten Kupplungshälfte hin randoffen und zur Außenseite des dieser Wange benachbarten U-Schenkels weitergeführt ist, ergibt sich eine einfache Steckmontage des Bolzens.

In Weiterbildung der Erfindung weist die nutartige Aussparung in Draufsicht eine L-Form auf, deren einer L-Schenkel zu der Wange hin randoffen ist und deren anderer L-Schenkel sich in Umfangsrichtung der Lagerausnehmung erstreckt. Dadurch kann nach erfolgter Steckmontage der Bolzen in seinen Lagerausnehmungen so gedreht werden, dass ein Herauswandern des Bolzens während des Wischbetriebs vermieden wird.

Um den Bolzen in seiner Betriebsposition gegen eine unerwünschte Rückdrehbewegung zu sichern, ist an der wischblattseitigen Kupplungshälfte eine Rückdrehsicherung bewegbar angeordnet, die den Vorsprung des Bolzens in dessen Betriebsposition hintergreift.

Zweckmäßig ist dazu der Bolzen an seiner einen Stirnseite mit einer Verdrehhandhabe versehen.

Gemäß einer anderen Ausführungsform der Erfindung ist der Bolzen mit einer Ringnut versehen, in welche eine auf die Breite der Ringnut abgestimmte Sicherungsnase der zweiten Kupplungshälfte greift. Wenn der Bolzen in seine Lagerausnehmungen sitzt, wird die Sicherungsnase in die Ringnut des Bolzens eingebracht, der dadurch in seine Betriebsstellung fixiert ist.

Hinsichtlich einer einfachen Montage und Demontage der Verbindungsvorrichtung ist es besonders vorteilhaft, wenn die Sicherungsnase gegen eine Rückstellkraft aus der Ringnut bewegbar ist.

Dies kann praxisnah dadurch erreicht werden, dass die zweite Kupplungshälfte aus einem elastischen Kunststoff hergestellt ist und die Sicherungsnase an dem freien Ende eines an der zweiten Kupplungshälfte im Bereich der Ringnut ausgebildeten, gegen eine Rückstellkraft auslenkbaren Lappens angeordnet ist. Zum Einbringen des Bolzens wird der Lappen soweit ausgelenkt, dass die Sicherungsnase aus dem Profil der Lagerausnehmungen gelangt. Wenn der Bolzen dann seine Betriebsposition erreicht hat, federt der Lappen in seine Ausgangsstellung, in welcher die Sicherungsnase in die Ringnut greift.

Zur einfachen Auslenkung des Lappens ist an der von der Sicherungsnase abgewandten Außenseite des Lappens eine Auslenkhilfe angeordnet.

Bei einem Wischblatt, dessen Tragelement zwei zueinander in einer gemeinsamen Ebene parallel ausgerichtete Federbänder aufweist, ist es hinsichtlich der Stabilität des Tragelements und damit des Wischblatts besonders vorteilhaft, wenn die zweite Kupplungshälfte die voneinander abgewandten Längskanten der Federbänder des Tragelements mit krallenartigen Ansätzen umgreift.

Die Erfindung betrifft auch ein Wischblatt mit den wischblattseitigen Teilen einer derartigen Verbindungsvorrichtung, siehe Anspruch 12.

Weitere vorteilhafte weiterbildungen und Ausgestaltungen der Erfindung sind in der nachfolgenden Beschreibung von in der dazugehörigen Zeichnung dargestellten Ausführungsbeispielen angegeben.

### Zeichnung

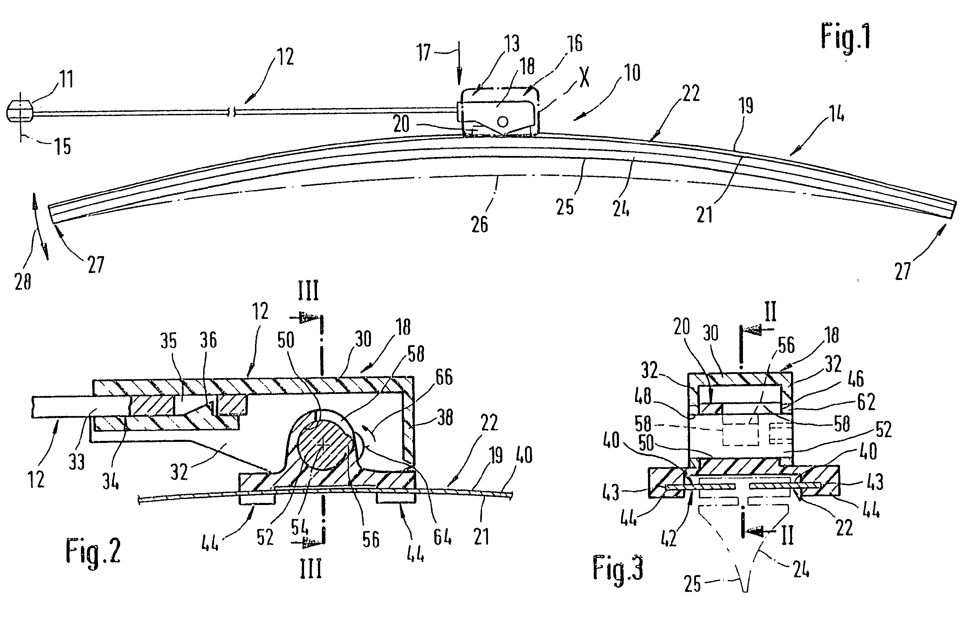

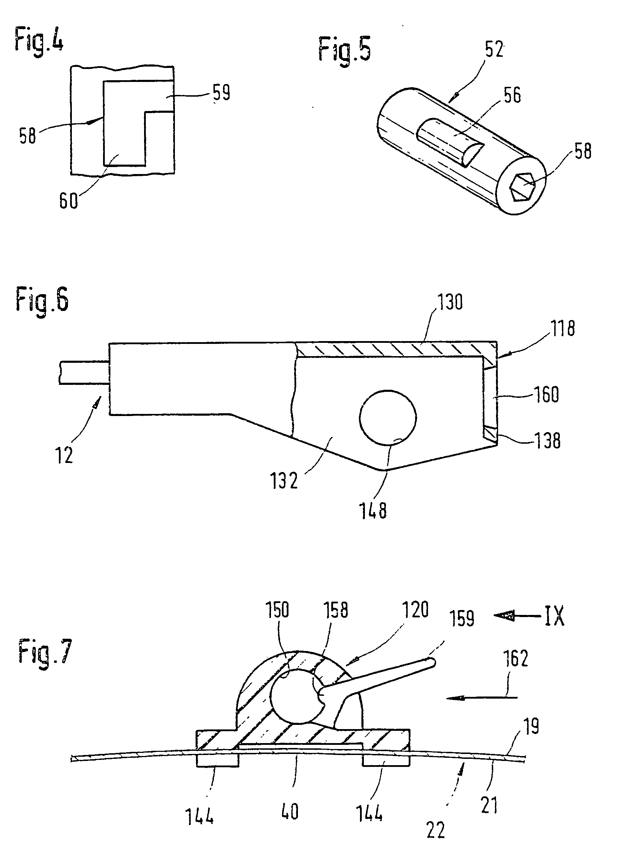

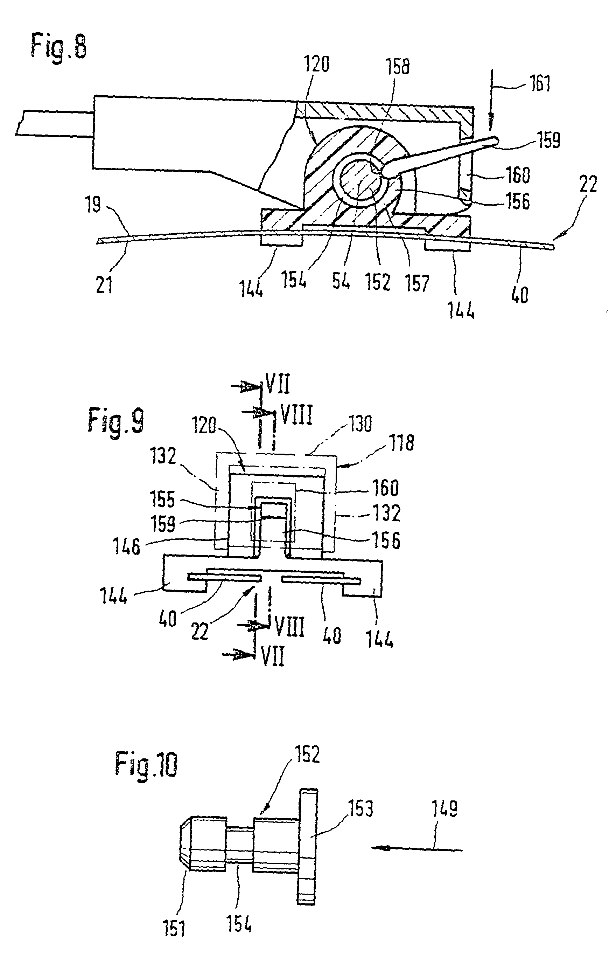

In der Zeichnung zeigen: Figur 1 eine unmaßstäbliche Seitenansicht eines Wischblatts, das über eine zwei Kupplungshälften aufweisende Verbindungsvorrichtung mit einem angetriebenen Wischerarm verbunden ist, Figur 2 eine in Figur 1 mit "X" bezeichnete Einzelheit in vergrößerter Darstellung und in Längsrichtung entlang der Linie II-II in Figur 3 geschnitten, Figur 3 einen Querschnitt entlang der Linie III-III in Figur 2 durch die Anordnung gemäß Figur 2, Figur 4 eine Teil-Abwicklung der Innenwand einer in Figur 3 in der zweiten Kupplungshälfte erkennbaren Lagerausnehmung, Figur 5 eine perspektivische Ansicht eines zur Gelenkverbindung gehörenden Bolzens, Figur 6 einen Teil-Längsschnitt gemäß Figur 2 durch das freie Ende eines zu einer anderen Ausführungsform der Erfindung gehörenden Wischerarms, Figur 7 einen Längsschnitt gemäß Figur 2 durch die wischblattseitige Kupplungshälfte der anderen Verbindungsvorrichtung entlang der Linie VII-VII in Figur 9 geschnitten, Figur 8 einen Teil-Längsschnitt durch die zweite Ausführungsform der Verbindungsvorrichtung entlang der Linie VIII-VIII in Figur 9 geschnitten, Figur 9 eine Ansicht in Richtung des Pfeiles "IX" in Figur 7 auf die wischblattseitige Kupplungshälfte und Figur 10 eine Ansicht eines zur zweiten Ausführungsform der Verbindungsvorrichtung gehörenden Bolzens.

### Beschreibung der Ausführungsbeispiele

Zu einem in Figur 1 in Seitenansicht dargestellten Wischhebel 10 gehören ein angetriebener Wischerarm 12 und ein mit diesem lösbar verbundenes Wischblatt 14. Das eine Ende 11 des Wischerarms 12 ist mit einer nicht dargestellten Antriebsvorrichtung wirkverbunden und ist demnach als antriebsseitiges Ende des Wischerarms anzusehen. Während des Betriebs pendelt der Wischerarm 12 um eine Pendel- oder Antriebsachse 15 (Figur 1) und verschiebt somit das an seinem anderen, freien Ende 13 über eine Verbindungsvorrichtung 16 mit diesem verbundenes Wischblatt 14 quer zu dessen Längserstreckung über die zu wischende Scheibe. Dabei ist das Wischblatt 14 durch eine in Richtung des Pfeiles 17 wirkende Anlegekraft an der Scheibe angelegt. Zu der Verbindungsvorrichtung 16 gehören eine erste, zum Wischerarm 12 gehörende Kupplungshälfte 18, die mit einer zweiten, wischblattseitigen Kupplungshälfte 20 zusammenarbeitet. Diese zweite Kupplungshälfte 20 sitzt im Längsmittelbereich eines zum Wischblatt 14 gehörenden, federelastischen, bandartig langgestreckten, mehrteiligen Tragelements 22, an dessen dem Wischerarm 12 zugewandten oberen Bandfläche 19. An der unteren Bandfläche 21 des Trageelements 22 ist eine langgestreckte, gummielastische Wischleiste 24 längsachsenparellel angeordnet. Das Wischblatt 14 ist mit einer an der Wischleiste 24 vorhandenen Wischlippe 25 an der Oberfläche 26 der zu wischenden Scheibe anlegbar. In Figur 1 ist die Oberfläche 26 dieser Scheibe als strichpunktierte Linie eingezeichnet. Es handelt sich dabei um die sphärisch gekrümmte Windschutzscheibe eines Kraftfahrzeuges. An der von dieser Scheibenoberfläche 26 abgewandten oberen Bandseite 19 des Tragelements 22 ist die wischblattseitige Kupplungshälfte 20 der Verbindungsvorrichtung 16 befestigt. Wie weiter aus Figur 1 ersichtlich ist, hat das noch nicht an der Scheibe angelegte gekrümmte Wischblatt 14 eine stärkere Krümmung als die Scheibenoberfläche 26. Da die Linie 26 die stärkste Krümmung der Scheibenoberfläche darstellen soll ist klar ersichtlich, dass die Krümmung des mit seinen beiden Enden 27 an der Scheibe anliegenden, noch unbelasteten Wischblatts 14 stärker ist als die maximale Scheibenkrümmung. Unter der über dem Wischerarm 12 ausgeübten, in Richtung des Pfeiles 17 wirkenden Anlegekraft legt sich das Wischblatt mit seiner Wischleiste 24 beziehungsweise mit deren Wischlippe 25 über seine gesamte Länge an der Scheibenoberfläche 26 an. Dabei baut sich im aus Metall gefertigten, federelastischen Tragelement 22 eine Spannung auf, welche für eine ordnungsgemäße Anlage der Wischleiste 24 über deren gesamte Länge an der Scheibe 26 sorgt. Weil die sphärisch gekrümmte Scheibe nicht einen Abschnitt einer Kugeloberfläche darstellt, muss das Wischblatt 14 derart gelenkig mit dem Wischerarm 12 verbunden sein, dass es eine Schwingbewegung (Doppelpfeil 28) gegenüber dem Wischerarm 12 ausführen kann. Die Schwingbewegung muss also in einer auf der Scheibe 26 stehenden Ebene erfolgen, welche in Richtung der Wischerarm-Längserstreckung ausgerichtet ist. Die Schwing- oder Pendelachse liegt somit quer zur Längserstreckung des Wischerarms 12 und quer zur Richtung des Anpressdrucks (Pfeil 17), mit welcher das Wischblatt 14 zur Scheibe 26 belastet ist.

Im Folgenden soll nun auf die besondere Ausgestaltung dieser Gelenkverbindung - unter Zuhilfenahme der Figuren 2 bis 10 - näher eingegangen werden. Bei der Betrachtung der Figuren 2, 7 und 8 ist zu berücksichtigen, dass aus Gründen der Übersichtlichkeit von dem Wischblatt 14 lediglich ein Teilabschnitt des bei den Ausführungsbeispielen zweiteiligen Tragelements 22 dargestellt ist. Die Figuren 2 bis 5 zeigen den Aufbau einer ersten Ausführungsform der Verbindungsvorrichtung 16. Aus Figur 2 ist ersichtlich, dass auf ein stangenförmiges Element des Wischerarms 12 die wischerarmseitige Kupplungshälfte 18 aufgerastet ist. Die Kupplungshälfte 18 hat, wie aus Figur 3 ersichtlich ist, einen im wesentlichen U-förmigen Querschnitt. Sie hat somit eine U-Basis 30 und zwei mit Abstand voneinander liegende U-Schenkel 32. Die aus einem elastischen Kunststoff gefertigte Kupplungshälfte 18 ist mit einem Einsteckkanal 34 versehen, dessen Querschnitt auf den Querschnitt des stangenförmigen Teils 33 des Wischerarms abgestimmt ist. Das stangenförmige Teil 33 des Wischerarms 12 weist einen Durchbruch 35 auf, in welchen ein Rastzahn 36 greift, der an einer elastisch auslenkbaren Wand 37 des Einsteckkanals 34 angeordnet ist. Das vom stangenförmigen Teil 33 abgewandte Ende der zum wischerarm gehörenden Kupplungshälfte 18 ist durch eine Abschlusswand 38 abgeschlossen.

Weiter zeigen die Figuren 2 und 3, dass die andere, wischblattseitige Kupplungshälfte 20 auf dem Tragelement 22 des Wischblatts 14 angeordnet ist. Zum besseren Verständnis des Wischblattaufbaus, ist in Figur 3 die Wischleiste 24 strichpunktiert eingezeichnet worden. In Längsnuten der Wischleiste 24 sind zwei zum Tragelement 22 gehörende Federschienen 40 untergebracht, welche mit Längs-Randstreifen 42 aus diesen Längsnuten heraustreten. Die blockartige aufgebaute Kupplungshälfte 20 umgreift mit krallenartigen Ansätzen 44 die voneinander abgewandten Längskanten 43 des beim Ausführungsbeispiel zweiteiligen Tragelements 22. Die krallenartigen Ansätze 44 der Kupplungshälfte 20 tragen somit auch zu einer Sicherung der beiden Federschienen 40 des Tragelements 22 in den Längsnuten der Wischleiste 44 bei. Zum Anschließen des Wischblatts am Wischerarm werden die beiden Kupplungshälften so zusammen gefügt, dass sich die wischblattseitige Kupplungshälfte 20 in den von den Wänden 30, 32 umschlossenen Raum der Kupplungshälfte 18 erstrecken. Die maßliche Abstimmung ist dabei so getroffen, dass die beiden seitlichen mit Abstand voneinander, parallel zueinander und in Längsrichtung des Wischblatts ausgerichteten Wangen 46 der Kupplungshälfte 20 möglichst spielfrei passend zwischen die U-Schenkel 32 der Kupplungshälfte 18 eintauchen. Zur Bildung des erforderlichen Pendelgelenks sind sowohl in den beiden U-Schenkeln 32 als auch in der Kupplungshälfte 20 miteinander fluchtende Lagerausnehmungen angeordnet. Die Lagerausnehmungen in den U-Schenkeln 48 sind mit der Bezugszahl 48 versehen worden. Die Lagerausnehmung in der zweiten Kupplungshälfte 20 ist mit der Bezugszahl 50 bezeichnet. Ein zur Gelenkverbindung gehörender Bolzen 52 (Figur 5) ist gemäß den Figuren 2 und 3 in die Lagerausnehmungen 48 und 50 eingebracht. Es ergibt sich somit eine Gelenk- oder Schwingachse 54 (Figur 2), die quer zur Längserstreckung des Wischerarms 12 und quer zur Richtung der Anlegekraft (Pfeil 17) ausgerichtet ist. Im Mittelbereich seiner Mantelfläche ist der Bolzen 52 mit einem Vorsprung 56 versehen. An seiner einen Stirnseite weist der Bolzen 52 eine im Querschnitt sechskantige Aussparung 58 auf, die zur Aufnahme eines entsprechenden Werkzeuges dient, mit dessen Hilfe der Bolzen 52 um seine Längsachse verdreht werden kann, wenn dieser in seinen Lagerausnehmungen 48, 50 untergebracht ist. Damit eine solche Unterbringung möglich ist, ist dem Vorsprung 56 eine auf die Abmessungen des Vorsprungs 56 abgestimmte nutartige Aussparung 58 im Bereich der Lagerausnehmung 50 angeordnet. Die Aussparung 58 befindet sich somit an der Innenwand der Lagerausnehmung 50. In Figur 4 ist dieser Teilbereich der Innenwand der Lagerausnehmung 50 als Abwicklung dargestellt. Dort ist ersichtlich, dass die nutartige Aussparung 58 in Draufsicht eine L-Form aufweist, deren einer L-Schenkel 59 zu der einen Wange 46 hin randoffen ist, und deren L-Schenkel 60 sich in Umfangsrichtung der Lagerausnehmung 50 erstreckt. Um den Bolzen ordnungsgemäß in seine Lagerausnehmungen 48, 50 einbringen zu können, ist die nutartige Aussparung 58 der zweiten Kupplungshälfte 20 über eine Durchtrittsnut 62 in dem einen U-Schenkel 32 der wischerarmseitigen Kupplungshälfte 18 weitergeführt.

Zur Herstellung der Gelenkverbindung werden also wie schon erwähnt die Lagerausnehmungen 48 und 50 miteinander in Deckung gebracht, so dass der Bolzen 52 in diese Lagerausnehmungen eingebracht werden kann. Die Ausrichtung der beiden Kupplungshälften 18 und 20 muss dabei so getroffen werden, dass der L-Schenkel 59 der Aussparung 58 und die Durchtrittsnut 62 im Bereich der Lagerausnehmung 48 des U-Schenkels 32 miteinander fluchten. Nach dem Einbringen des Bolzens 52 in seiner ordnungsgemäße Betriebsposition (Figur 3) wird der Bolzen 52 mit Hilfe des besagten Werkzeuges und der Verdrehhandhabe 58 so im Uhrzeigersinn gedreht, dass der Vorsprung 56 in den anderen L-Schenkel 60 gelangt und die in Figur 2 gezeigte Verriegelungsstellung erreicht, in welcher der Bolzen 52 während des Wischbetriebs nicht aus seinen Lagerausnehmungen 48, 50 herauswandern kann.

Damit der Bolzen 52 in seiner Betriebsposition verbleibt ist an der Kupplungshälfte 20 ein Schwenkriegel 64 angeordnet, der gemäß einem im Figur 2 angegebenen Pfeil 66 in eine Sicherungsstellung gebracht werden kann, in welcher er den Vorsprung 56 hintergreift und in dieser Position hält. Zur Demontage wird zunächst der Schwenkriegel 64 entgegen der Richtung des Pfeils 66 in seine in Figur 2 gezeigte Löseposition gebracht und danach der Bolzen 52 entgegen dem Uhrzeigersinn zurückgedreht, so dass aus seinen Lagerausnehmungen 48, 50 herausgenommen werden kann.

Eine zweite Ausführungsform der Erfindung ist in den Figuren 6 bis 10 dargestellt. Der grundsätzliche Aufbau dieser Verbindungsvorrichtung entspricht im wesentlichen dem Aufbau der oben beschriebenen Verbindungsvorrichtung. Der Wischerarm 12 ist somit an seinem freien, von der Antriebsseite 11 abgewandten, freien Ende ebenfalls mit der einen, wischerarmseitigen Kupplungshälfte 118 versehen, die einen ebenfalls U-förmigen Querschnitt aufweist, der an seinem freien Ende durch eine Abschlusswand 138 abgedeckt ist. In den U-Schenkeln 132, welche durch eine U-Basis 130 miteinander verbunden sind, sind jeweils miteinander fluchtende Lagerausnehmungen 148 angeordnet (Figur 6). An dem entsprechend der schon beschriebenen Ausführungsform ausgebildeten Tragelement 22 des Wischblatts befindet sich auf dessen oberen Bandfläche 19 ebenfalls die wischblattseitige Kupplungshälfte 120. Auch diese ist in der schon beschriebenen Weise über krallenartige Ansätze 144 mit dem zwei parallel zueinander angeordnete Federschienen 40 aufweisenden Tragelements 22 angeordnet. Entsprechend der schon beschriebenen Ausführungsform taucht im zusammengebauten Zustand (Figuren 8 und 9) die Kupplungshälfte 20 des Wischblatts so zwischen die beiden U-Schenkel 132 der wischerarmseitigen Kupplungshälfte 118 ein, dass die seitlichen, sich in Längsrichtung des Wischblatts erstreckenden Wangen 146 der Kupplungshälfte 120 an den einander zugewandten Innenwänden der U-Schenkel 132 beweglich passend geführt sind. Weiter ist der Kupplungshälfte 120 eine Lagerausnehmung 150 angeordnet (Figur 7), welche in der in Figur 9 gezeigten Zusammenbauposition der Verbindungsvorrichtung mit den beiden Lagerausnehmungen 148 der wischerarmseitigen Kupplungshälfte 118 fluchtet. Zur Herstellung der Gelenkverbindung wird dann in die Lagerausnehmungen 148, 150 ein in Figur 10 dargestellter Bolzen 152 eingebracht, der an seinem Ende mit einem hutartigen Ringbund 153 versehen ist. Das andere, freie Ende des Bolzens 152 ist mit einer Anlaufschräge 151 versehen. In seinem Mittelabschnitt hat der Bolzen 152 eine Ringnut 154, welche sich bei montiertem Bolzen im Mittelabschnitt der Lagerausnehmung 150 in der wischblattseitigen Kupplungshälfte 120 befindet. Die lagerbeziehungsweise gelenkwirksame Länge des Bolzens 152 ist ebenso wie bei dem Bolzen 52 der schon beschriebenen Ausführungsform auf die Breite der wischerarmseitigen Kupplungshälfte 118 (beziehungsweise 18) abgestimmt. Zur Sicherung des Bolzens 152 in seiner Betriebsposition weist die aus einem elastischen Kunststoff hergestellte wischblattseitige Kupplungshälfte 120 einen durch Schlitze 155 freigestellten, gegen eine Rückstellkraft (Pfeil 162) auslenkbaren Lappen 156 auf, der mit einem Wurzelbereich 157 mit dem Körper der Kupplungshälfte 120 verbunden ist. Die Anordnung des Lappens 156 ist so getroffen, dass er - bezogen auf die Schwingachse 54 der Verbindungsvorrichtung - etwa radial gegen die Wirkung der Rückstellkraft (Pfeil 162) auslenkbar ist. An seiner der Lagerausnehmung 150 zugewandten Innenseite ist der Lappen 156 mit einer Sicherungsnase 158 versehen, welche bei montierter Verbindungsvorrichtung passen in die Ringnut 154 des Bolzens 152 greift und dadurch ein Herauswandern des Bolzens 152 entgegen seiner Montagerichtung (Pfeil 149 in Figur 10) verhindert. An seiner der Sicherungsnase 158 gegenüberliegenden Außenseite ist der Lappen 156 mit einem hebelartigen Arm 159 (in Figur 10 abgeschnitten) versehen, welcher im zusammengebauten Zustand der Verbindungsvorrichtung durch eine Öffnung 160 in der Abschlusswand 138 der wischerarmseitigen Kupplungshälfte 118 hindurchtritt. Durch Druck in Richtung des Pfeiles 161 (Figur 8) auf den Arm 159 kann der Lappen 156 und mit diesem die Sicherungsnase 158 in etwa radialer Richtung aus der Ringnut 154 des Bolzens 152 ausgelenkt werden, wobei der Lappen in seinem Wurzelbereich 157 fixiert bleibt. Bei der Montage der Verbindungsvorrichtung - also wenn der Bolzen 152 in Richtung des Pfeiles 149 in seine Lagerausnehmungen 148, 150 eingebracht wird - drückt die Anlaufschräge 151 gegen die Sicherungsnase 158 und zwingt diese entgegen einer Rückstellkraft aus ihrer Ausgangsposition, so dass der Bolzen 152 soweit eingeschoben werden kann, bis der Ringbund 153 an der Außenseite des U-Schenkels 132 anliegt. In dieser Position befindet sich dann auch die Ringnut 154 des Bolzens 152 im Bereich der Sicherungsnase 158, so dass der Lappen 156 unter der Wirkung der Rückstellkraft in seine in Figur 8 dargestellt Betriebsposition zurückfedert, wobei die Sicherungsnase 158 in die Ringnut 154 eintaucht. Zur Demontage des Wischblatts vom Wischerarm wird durch Belastung des Armes 159 in Richtung des Pfeiles 161 die Sicherungsnase 158 aus der Ringnut 154 gedreht und danach der Bolzen 152 entgegen der Richtung des Pfeils 159 aus seinen Lagerausnehmungen 148,150 entfernt.

Beiden Ausführungsformen ist gemeinsam, dass sowohl die beiden U-Schenkel (32 bzw. 132) als auch die zweite Kupplungshälfte miteinander fluchtenden Lagerausnehmungen (52 bzw. 152) von einem Bolzen durchsetzt sind, welcher in Richtung seiner die Gelenkachse bildenden Längsachse arretierbar und lösbar ist.

Aus dem vorstehenden ergibt sich zwangsläufig, dass eine Nutzung der Erfindung schon dann gegeben ist, wenn entweder das Wischblatt und/oder der Wischerarm entsprechend der hier hinsichtlich des Gelenks gegebenen und beanspruchten Offenbarung ausgebildet ist.

## Patentansprüche

1. Verbindungsvorrichtung zum gelenkigen, lösbaren Verbinden eines Wischblatts (14) zum Reinigen von Scheiben insbesondere von Kraftfahrzeugen mit einem insbesondere von seinem einen Ende (11) aus angetriebenen Wischerarm (12), der an seinem anderen, insbesondere freien Ende (13) eine erste, wischerarmfeste, im Querschnitt U-förmige Kupplungshälfte (18 beziehungsweise 118) aufweist und zur Verbindungsvorrichtung eine zweite, wischblattfeste Kupplungshälfte (20 beziehungsweise 120) gehört, die an der oberen Bandfläche (19) eines insbesondere bandartig langgestreckten, federelastischen Tragelements (22) angeordnet ist, an dessen anderer, unteren Bandfläche (21) sich eine an der Scheibe anlegbare Wischleiste (24) befindet, wobei an der zweiten Kupplungshälfte zwei mit Abstand voneinander, im wesentlichen parallel zueinander und in Längsrichtung des Wischblatts ausgerichtete Wangen (46) ausgebildet sind, welche zwischen die U-Schenkel (32) der ersten Kupplungshälfte (18) eintauchen, wobei sowohl die beiden U-Schenkel (32) als auch die zweite Kupplungshälfte (20) in miteinander fluchtenden Lagerausnehmungen (48, 50) von einem Bolzen (52) durchsetzt sind, **dadurch gekennzeichnet, dass** der Bolzen in Richtung seiner die Gelenkachse (54) bildenden Längsachse arretierbar und lösbar ist.

2. Verbindungsvorrichtung nach Anspruch 1, **dadurch gekennzeichnet, dass** der Bolzen (52) an seiner Mantelfläche mit einem Vorsprung (56) versehen ist, dem eine auf die Abmessungen des Vorsprungs abgestimmte, an der Mantelfläche der Lagerausnehmung (50) ausgebildete, nutartige Aussparung (58) in der zweiten Kupplungshälfte (20) zugeordnet ist.

3. Verbindungsvorrichtung nach Anspruch 2, **dadurch gekennzeichnet, dass** die nutartige Aussparung (58) in Draufsicht eine L-Form aufweist, deren einer L-Schenkel (59) zu der Wange (46) hin randoffen und zur Außenseite des dieser Wange benachbarten U-Schenkels (32) weitergeführt ist.

4. Verbindungsvorrichtung nach Anspruch 3, **dadurch gekennzeichnet, dass** die nutartige Aussparung (58) in Draufsicht eine L-Form aufweist, deren einer L-Schenkel (59) zu der Wange (46) hin randoffen ist und deren anderer L-Schenkel (60) sich in Umfangsrichtung der Lagerausnehmung (50) erstreckt.

5. Verbindungsvorrichtung nach Anspruch 4, **dadurch gekennzeichnet, dass** der Bolzen (52) an seiner Stirnseite mit einer Verdrehhandhabe (58) versehen ist.

6. Verbidungsvorrichtung nach einem der Ansprüche 4 oder 5, **dadurch gekennzeichnet, dass** dem Bolzen (52) eine an der wischblattseitigen Kupplungshälfte (20) bewegbar angeordnete, den Vorsprung (56) in dessen Betriebsposition hintergreifende Rückdrehsicherung (64) zugeordnet ist.

7. Verbindungsvorrichtung nach Anspruch 1, **dadurch gekennzeichnet, dass** der Bolzen (152) mit einer Ringnut (154) versehen ist, in welche eine auf die Breite der Ringnut abgestimmte Sicherungsnase (158) der zweiten Kupplungshälfte (120) greift.

8. Verbindungsvorrichtung nach Anspruch 7, **dadurch gekennzeichnet, dass** die Sicherungsnase (158) gegen eine Rückstellkraft aus der Ringnut (154) bewegbar ist.

9. Verbindungsvorrichtung nach Anspruch 8, **dadurch gekennzeichnet, dass** die zweite Kupplungshälfte (120) aus einem elastischen Kunststoff hergestellt ist und die Sicherungsnase (158) an dem freien Ende eines an der zweiten Kupplungshälfte im Bereich der Ringnut (154) ausgebildeten, gegen eine Rückstellkraft auslenkbaren Lappens (156) angeordnet ist.

10. Verbindungsvorrichtung nach Anspruch 8, **dadurch gekennzeichnet, dass** der an der von der Sicherungsnase (158) abgewandten Außenseite des Lappens (156) eine Auslenkhilfe (159) angeordnet ist.

11. Verbindungsvorrichtung nach Anspruch 10, **dadurch gekennzeichnet, dass** die zweite Kupplungshälfte die voneinander abgewandten Längskanten (43) des zwei Federbänder (40) aufweisenden Tragelements (22) mit krallenartigen Ansätzen (144) umgreift.

12. Wischblatt mit den wischblattseitigen Teilen einer Verbindungsvorrichtung nach einem der vorhergehenden Ansprüche, **gekennzeichnet durch** eine wischblattfeste Kupplungshälfte (20, 120), die an der oberen Bandfläche (19) eines insbesondere bandartig langgestreckten, federelastischen Tragelements (22) angeordnet ist, an dessen anderer, unteren Bandfläche (21) sich eine an der Scheibe anlegbare Wischleiste (24) befindet, wobei an der wischblattfesten Kupplungshälfte zwei mit Abstand voneinander, im wesentlichen parallel zueinander und in Längsrichtung des Wischblatts ausgerichtete Wangen (46) ausgebildet sind, welche zwischen die U-Schenkel (32) einer ersten Kupplungshälfte (18) des Wischerarms eintauchen können, wobei sowohl die beiden U-Schenkel (32) als auch die zweite Kupplungshälfte (20) in miteinander fluchtenden Lagerausnehmungen (48, 50) von einem Bolzen (52) durchsetzbar sind und der Bolzen in Richtung seiner die Gelenkachse (54) bildenden Längsachse arretierbar und lösbar ist.

## Claims

1. Connecting device for connecting a wiper blade (14) for cleaning windows in particular of motor vehicles to a wiper arm (12) in an articulated and detachable manner, which wiper arm is driven in particular from its one end (11) and, at its other, in particular free end (13), has a first coupling half (18 or 118), which is fixed on the wiper arm and is U-shaped in cross section, and the connecting device includes a second coupling half (20 or 120) which is fixed on the wiper blade and is arranged on the upper band surface (19) of a resilient supporting element (22), which, in particular, is elongated in the manner of a band and on the other, lower band surface (21) of which a wiper strip (24) which can be placed against the window is situated, two cheeks (46) which are aligned at a distance from each other and essentially parallel to each other and in the longitudinal direction of the wiper blade and which dip between the U-limbs (32) of the first coupling half (18) being formed on the second coupling half, with both the two U-limbs (32) and the second coupling half (20) being penetrated in mutually aligned bearing recesses (48, 50) by a bolt (52), **characterized in that** the bolt is lockable and detachable in the direction of its longitudinal axis forming the axis of articulation (54).

2. Connecting device according to Claim 1, **characterized in that** the bolt (52) is provided on its circumferential surface with a projection (56) which is assigned a groove-like cut-out (58) in the second coupling half (20), which cut-out is matched to the dimensions of the projection and is formed on the circumferential surface of the bearing recess (50).

3. Connecting device according to Claim 2, **characterized in that** the groove-like cut-out (58) has an L-shape in plan view, the one L-limb (59) of which is open at the edge towards the cheek (46) and is guided on further to the outside of the U-limb (32) adjacent to this cheek.

4. Connecting device according to Claim 3, **characterized in that** the groove-like cut-out (58) has an L-shape in plan view, the one L-limb (59) of which is open at the edge towards the cheek (46) and the other L-limb (60) of which extends in the circumferential direction of the bearing recess (50).

5. Connecting device according to Claim 4, **characterized in that** the bolt (52) is provided with a turning handle (58) on its end side.

6. Connecting device according to either of Claims 4 and 5, **characterized in that** the bolt (52) is assigned a reversing lock (64) which is arranged moveably on the wiper-blade-side coupling half (20) and engages behind the projection (56) in its operating position.

7. Connecting device according to Claim 1, **characterized in that** the bolt (152) is provided with an annular groove (154) in which a securing lug (158) of the second coupling half (120), which securing lug is matched to the width of the annular groove, engages.

8. Connecting device according to Claim 7, **characterized in that** the securing lug (158) can be moved out of the annular groove (154) counter to a restoring force.

9. Connecting device according to Claim 8, **characterized in that** the second coupling half (120) is produced from a flexible plastic, and the securing lug (158) is arranged at the free end of a tab (156) which is formed in the region of the annular groove (154) on the second coupling half and can be deflected counter to a restoring force.

10. Connecting device according to Claim 8, **characterized in that** a deflecting aid (159) is arranged on the outside of the tab (156), the outside being remote from the securing lug (158).

11. Connecting device according to Claim 10, **characterized in that** the second coupling half engages with claw-like extensions (144) around the longitudinal edges (43), which are remote from each other, of the supporting element (22) which has two spring bands (40).

12. Wiper blade with the wiper-blade-side parts of a connecting device according to one of the preceding claims, **characterized by** a coupling half (20, 120) which is fixed on the wiper blade and is arranged on the upper band surface (19) of a resilient supporting element (22), which, in particular, is elongated in the manner of a band and on the other, lower band surface (21) of which a wiper strip (24) which can be placed against the window is situated, two cheeks (46) which are aligned at a distance from each other and essentially parallel to each other and in the longitudinal direction of the wiper blade and which can dip between the U-limbs (32) of a first coupling half (18) of the wiper arm being formed on the coupling half fixed on the wiper blade, with both the two U-limbs (32) and the second coupling half (20) being penetrable in mutually aligned bearing recesses (48, 50) by a bolt (52), and the bolt being lockable and detachable in the direction of its longitudinal axis forming the axis of articulation (54).

## Revendications

1. Dispositif de liaison pour relier de manière articulée et amovible un balai d'essuie-glace (14) servant à nettoyer les vitres notamment de véhicules automobiles à un bras d'essuie-glace (12), notamment entraîné par une extrémité (11), et dont l'autre extrémité (13), notamment libre, comporte une première moitié de dispositif d'accouplement (18, 118) solidaire du bras et ayant en section une forme de U et une seconde moitié de dispositif d'accouplement (20, 120) solidaire du balai d'essuie-glace, et montre sur la face supérieure (19) de l'élément de support (22) élastique comme un ressort, notamment en forme de bande allongée, et dont l'autre face, inférieure (21) comporte une lame d'essuyage (24) qui peut s'appliquer contre la vitre, la seconde moitié du dispositif d'accouplement ayant deux joues (46), écartées, principalement parallèles l'une à l'autre et s'étendant dans la direction longitudinale du balai d'essuie-glace, venant entre les branches en forme de U (32) de la première moitié de dispositif d'accouplement (18),
à la fois les deux branches en forme de U (32) et aussi la seconde moitié du dispositif d'accouplement (20) étant traversées par un goujon (52) dans des logements de palier alignés (48, 50),
**caractérisé en ce que**
le goujon peut se bloquer et se détacher dans la direction de l'axe longitudinal qui forme son axe d'articulation (54).

2. Dispositif de liaison selon la revendication 1,
**caractérisé en ce que**
le goujon (52) comporte une partie en saillie (56) sur sa surface-enveloppe à laquelle est associé un dégagement (58) en forme de rainure réalisée dans la surface-enveloppe du logement de palier (50) et correspondant aux dimensions de la partie en saillie, ce dégagement étant associé à la seconde moitié de dispositif d'accouplement (20).

3. Dispositif de liaison selon la revendication 2,
**caractérisé en ce que**
le dégagement (58) en forme de rainure a en vue de dessus une forme de L dont une branche (59) de la forme de L a un bord ouvert vers la joue (46) et vers le côté extérieur de la branche (32) de la forme en U voisine de cette joue.

4. Dispositif de liaison selon la revendication 3,
**caractérisé en ce que**
le dégagement (58) en forme de rainure a en vue de dessus une forme de L dont une branche (59) a un bord ouvert vers la joue (46) et dont l'autre branche (60) s'étend dans la direction périphérique du logement de palier (50).

5. Dispositif de liaison selon la revendication 4,
**caractérisé en ce que**
le goujon (52) comporte, au niveau de sa face frontale, une poignée de rotation (58).

6. Dispositif de liaison selon l'une des revendications 4 ou 5,
**caractérisé en ce qu'**
on associe au goujon (52) un moyen de blocage en rotation inverse (64) est prévu de manière mobile sur la moitié de dispositif d'accouplement (20) du côté du balai d'essuie-glace et qui vient prendre derrière la partie en saillie (56) en position de fonctionnement.

7. Dispositif de liaison selon la revendication 1,
**caractérisé en ce que**
le goujon (152) comporte une rainure annulaire (154) dans laquelle pénètre un bec de fixation (158) de la seconde moitié du dispositif d'accouplement (120) et correspondant à la largeur de la rainure annulaire.

8. Dispositif de liaison selon la revendication 7,
**caractérisé en ce que**
le bec de sécurité (158) peut être sorti de la rainure annulaire (154) en agissant contre une force de rappel.

9. Dispositif de liaison selon la revendication 8,
**caractérisé en ce que**
la seconde moitié du dispositif d'accouplement (120) est réalisée en une matière plastique élastique et le bec de sécurité (158) est prévu à l'extrémité libre d'une patte (156) réalisée sur la seconde moitié du dispositif d'accouplement au niveau de la rainure annulaire (154) et qui peut être dégagée en agissant contre une force de rappel.

10. Dispositif de liaison selon la revendication 8,
**caractérisé en ce que**
le côté extérieure de la patte (156) à l'opposé du bec de sécurité (158) comporte une patte (159) pour le dégagement.

11. Dispositif de liaison selon la revendication 10,
**caractérisé en ce que**
la seconde moitié de dispositif d'accouplement entoure les arêtes longitudinales (43) non tournées l'une vers l'autre de l'élément de support (22) muni des deux bandes élastiques (40) avec des prolongements (144) en forme de griffes.

12. Balai d'essuie-glace comportant des parties d'un dispositif de liaison du côté du balai d'essuie-glace selon l'une des revendications précédentes,
**caractérisé par**
une moitié de dispositif d'accouplement (20, 120) solidaire du balai d'essuie-glace, prévue sur la face supérieure (19) d'un élément de support (22) élastique comme un ressort, notamment allongé en forme de ruban et dont l'autre face inférieure (21) reçoit la lame d'essuyage (24) venant s'appliquer contre la vitre,
la moitié du dispositif d'accouplement solidaire du balai d'essuie-glace ayant deux joues (46) écartées l'une de l'autre, essentiellement parallèles et s'étendant dans la direction longitudinale du balai d'essuie-glace, ces joues pouvant pénétrer entre les branches en forme de U (32) d'une première moitié de dispositif d'accouplement (18) du bras d'essuyage, à la fois les secondes branches en forme de U (32) et la seconde moitié de dispositif d'accouplement (20) étant traversées par un goujon (52) venant dans des logements de palier (48, 50), alignés, et le goujon se bloquant et se débloquant dans la direction de son axe longitudinal constituant l'axe d'articulation.
